# EUROPÄISCHE PATENTSCHRIFT

(11) **EP 2 279 819 B1**
(45) Veröffentlichungstag und Bekanntmachung des Hinweises auf die Patenterteilung: **18.03.2015**
(21) Anmeldenummer: 10007314.7
(22) Anmeldetag: 15.07.2010
(51) Int. Cl.: B23D 45/12, B23D 47/04

(54) **Vorrichtung zum mechanischen Bearbeiten von rohr- oder stangenförmigen Werkstücken**
Device for mechanically machining tubular or rod-shaped workpieces
Dispositif d'usinage mécanique de pièces tubulaires ou en forme de tiges

(30) Priorität: 01.08.2009 DE 102009035839
(43) Veröffentlichungstag der Anmeldung: 02.02.2011
(73) Patentinhaber: Walter Möck GmbH, 72820 Sonnenbühl (DE)
(72) Erfinder: Möck, Walter, 72820 Sonnebühl (DE); Möck, Manuel, 72766 Reutlingen (DE)
(74) Vertreter: Kohler Schmid Möbus

(56) Entgegenhaltungen:
- EP-A1- 0 013 832
- EP-A2- 2 036 642
- GB-A- 1 535 562
- US-A- 6 098 258

## Beschreibung

Die Erfindung betrifft eine Vorrichtung zum mechanischen Bearbeiten von rohr- oder stangenförmigen Werkstücken mit den Merkmalen des Oberbegriffs des Patentanspruchs 1.

Eine solche Vorrichtung ist aus der EP 0 013 832 A1 bereits bekannt. Bei der bekannten Vorrichtung werden Ringe von einem rohrförmigen Werkstück in zwei Stufen abgetrennt. Zunächst wird eine Umfangsnut an der Trennstelle in das Werkstück eingebracht. Vor dem vollständigen Durchtrennen wird der abzutrennende Ringabschnitt durch entsprechende Werkzeuge endbearbeitet. Der fertige Ring fällt anschließend nach unten aus der Maschine.

Aus der DE 10 2007 043 359 A1 ist ebenfalls eine Vorrichtung bekannt, bei der nicht nur ein Sägeblatt sondern auch das Werkstück selbst rotierend angetrieben wird. Gleichzeitig ermöglicht das Vorsehen des Werkzeughalters eine Bearbeitung der Stirnseiten und/oder der Oberflächen des Werkstücks in der Vorrichtung. Der abgetrennte Abschnitt des Werkstücks wird von einem Abholfutter aufgenommen und kann an seiner Trennfläche bearbeitet, insbesondere entgratet werden.

Allerdings ist bei dieser bekannten Vorrichtung der Werkzeughalter an der Sägeeinrichtung angeordnet, sodass die Bearbeitung der Werkstücke eingeschränkt ist.

Der Erfindung liegt die Aufgabe zugrunde, die bekannten Vorrichtungen derart weiterzuentwickeln, dass eine vielseitige und rationellere Bearbeitung von Werkstücken möglich ist.

Die Aufgabe wird mit einer Vorrichtung mit den Merkmalen des Anspruchs 1 gelöst.

Bei der erfindungsgemäßen Vorrichtung wird die Länge der an ihrer inneren Oberfläche zu bearbeitenden Werkstücke nicht vom gegenseitigen Abstand zwischen Sägeeinrichtung und Werkzeughalter bestimmt. Der mindestens eine Werkzeughalter ist vielmehr frei beweglich gegenüber der Sägeeinrichtung angeordnet und kann somit die äußere als auch die innere Oberfläche von Werkstücken unabhängig von deren Länge komplett bearbeiten. Auch das Bearbeiten einer oder auch beider Stirnseiten, beispielsweise durch Entgraten, ist möglich. Die Werkstücke können dabei beliebige Querschnittsformen aufweisen. Auch Werkstücke aus Vollmaterial sind ohne Weiteres zu bearbeiten.

Die Sägeeinrichtung kann ebenfalls horizontal verfahrbar sein oder aber feststehen. Bei feststehender Sägeeinrichtung kann die Spanneinrichtung verfahrbar angeordnet sein, sodass auch bei feststehender Sägeeinrichtung ein Abtrennen des Werkstücks an der gewünschten Stelle möglich ist. Der Werkzeughalter kann dabei derart angeordnet sein, dass er sich beidseitig der Sägeeinrichtung platzieren lässt. Dadurch lässt sich die höchstmögliche Flexibilität des Einsatzes der an dem Werkzeughalter anordenbaren Werkzeuge an der Oberfläche des Werkstücks erreichen.

Bei einer vereinfachten Ausführungsform kann der mindestens eine Werkzeughalter jedoch auch an derselben Horizontalführung wie die Sägeeinrichtung angeordnet sein, allerdings unabhängig von dieser angetrieben werden. Der Werkzeughalter befindet sich bei dieser Lösung stets auf einer Seite der Sägeeinrichtung. Wenn sowohl die Sägeeinrichtung als auch der mindestens eine Werkzeughalter verfahrbar angeordnet sind, ist dies jedoch für viele Anwendungsfälle ausreichend.

Bei einer bevorzugten Ausführungsform können jedoch auch zwei Werkzeughalter vorgesehen sein, wobei die Sägeeinrichtung in axialer Erstreckung des Werkstücks gesehen zwischen den beiden Werkzeughaltern angeordnet ist. Bei dieser Lösung kann die Sägeeinrichtung feststehend oder ebenfalls in axialer Richtung des Werkstücks verfahrbar sein. In jedem Fall können Oberflächenbearbeitungen mittels an den Werkzeughaltern angeordneten Werkzeugen über die gesamte Länge des Werkstücks vorgenommen werden.

Die Vorrichtung weist ein verfahrbares Abholfutter sowohl für ein bearbeitetes als auch für ein in Bearbeitung befindliches Werkstück auf. Während der Bearbeitung eines Werkstücks kann dieses Abholfutter eine zusätzliche Stütze für das Werkstück an dessen zweitem Ende sein. Mit dem Abholfutter kann außerdem ein mittels der Sägeeinrichtung abgetrennter Abschnitt aufgenommen und aus der Vorrichtung ausgeführt werden. Mit dem Abholfutter ist es jedoch auch möglich, das vom Abholfutter gespannte Werkstück mit einem Werkzeug zu bearbeiten, das an dem mindestens einen Werkzeughalter angeordnet ist. So lässt sich beispielsweise der abgetrennte Werkstückteil an der Trennfläche entgraten und/oder an der inneren oder äußeren Oberfläche bearbeiten, während er vom Abholfutter gespannt ist. Gleichzeitig können weitere Bearbeitungen des Werkstück-Rumpfteils, der noch von der Spanneinrichtung gehalten wird, vorgenommen werden. Während einer Bearbeitung des abgetrennten Werkstückteils, der vom Abholfutter gespannt wird, kann in die Spanneinrichtung bereits ein neues Werkstück eingelegt und auch schon bearbeitet werden, sofern mindestens zwei Werkzeughalter für Werkzeuge an der Vorrichtung vorgesehen sind. Auf diese Weise ist eine ausgesprochen rationelle Werkstückbearbeitung in der Vorrichtung möglich.

Das Abholfutter kann ein Backenfutter sein und das Werkstück von außen spannen. Für rohrförmige Werkstücke ist jedoch eine Ausgestaltung des Abholfutters derart, dass es das Werkstück von innen spannt, besonders vorteilhaft. Dazu kann es beispielsweise drei oder bis zu sechs gegen die innere Oberfläche des Werkstücks anstellbare Spannbacken oder Spanndorne aufweisen, die gleichzeitig für eine Zentrierung des Werkstücks sorgen. Ist auch das Abholfutter rotierend antreibbar, so kann es noch während des Sägens des Werkstücks durch die Sägeeinrichtung in das Werkstück eingeführt werden und synchron mit diesem mitrotieren, wodurch sowohl der Sägevorgang stabilisiert wird als auch eine sichere Übernahme des abgetrennten Werkstückteils durch das Abholfutter gewährleistet wird.

Zusätzlich kann das Abholfutter selbstverständlich in Längsrichtung des Werkstücks verfahrbar angeordnet sein, sodass ein vom Abholfutter gespanntes Werkstück bzw. gespanntes Werkstückteil vollständig aus dem Bereich der Spanneinrichtung herausbewegt werden kann. Insbesondere bei dieser Ausgestaltung ist eine simultane Bearbeitung zweier Werkstücke bzw. Werkstückteile möglich, wobei ein Werkstück von der Spanneinrichtung und das andere Werkstück vom Abholfutter gespannt werden.

Die Spanneinrichtung kann ebenfalls unterschiedlich ausgestaltet sein. Sie kann beispielsweise die Form eines klassischen Backenfutters aufweisen. Vorteilhafterweise kann die Spanneinrichtung jedoch auch als Hohlspannfutter ausgestaltet sein, sodass auch ein längeres Werkstück in das Spannfutter eingeschoben und nach einem oder mehreren Abtrennvorgängen zur Bearbeitung eines neuen Werkstückabschnitts stückweise aus dem Hohlspannfutter herausgeschoben werden kann. Mit den an dem mindestens einen Werkzeughalter angeordneten Werkzeugen kann das Werkstück damit in gewünschter Weise bearbeitet werden, bevor es durchtrennt wird.

Weiter ist es möglich, die Spanneinrichtung derart auszubilden, dass sie rohrförmige Werkstücke von innen spannt. Dies hat den Vorteil, dass die gesamte Oberfläche des Werkstücks für eine Bearbeitung durch ein Werkstück frei zugänglich ist.

Die Antriebseinrichtung zur rotativen Drehung des Werkstücks kann vorzugsweise ebenfalls in der Spanneinrichtung enthalten sein. Die Rotation der Spanneinrichtung versetzt damit auch das Werkstück in Rotation.

Zweckmäßigerweise ist der mindestens eine Werkzeughalter als Revolverkopf ausgebildet und derart gestaltet, dass er gleichzeitig mehrere angetriebene und/oder nicht angetriebene Werkzeuge aufnehmen kann. Mit diesen Werkzeugen kann vor einem Trennvorgang das in der Spanneinrichtung befindliche Werkstück an seinem freien Ende sowie über mindestens eine axiale Länge bearbeitet werden, die der Länge des abzutrennenden Werkstückabschnitts entspricht. Dabei können sowohl die äußere Oberfläche als auch die innere Oberfläche des Werkstücks bearbeitet werden. Als Werkzeuge kommen beispielsweise Drehmeißel, Fräser oder Bohrer in Frage.

Um ein ungestörtes Einspannen eines Werkstücks in die Spannvorrichtung zu erleichtern, können die Sägeeinrichtung und/oder der mindestens eine Werkzeughalter vorteilhafterweise zu oder von dem Werkstück weg verschwenkbar sein.

Die zu bearbeitenden Werkstücke können verschiedene Durchmesser und Querschnittsformen aufweisen und beispielsweise geschmiedete oder gegossene Büchsen, Rohre, Profile oder Schleudergussrohre, insbesondere aus Metall sein. Auch die Bearbeitung von Werkstücken aus Kunststoff oder aus Verbundwerkstoffen ist möglich. Sind die Werkstücke sehr lang, ist es außerdem vorteilhaft, wenn das zu bearbeitende Werkstück auf Stützrollen gelagert ist.

Die Erfindung betrifft außerdem ein Verfahren zur mechanischen Oberflächenbearbeitung von rohr- oder stangenförmigen Werkstücken mit den Merkmalen des Anspruchs 10.

Dies stellt eine besonders rationelle Bearbeitung von Werkstücken dar. Der abgetrennte Werkzeugabschnitt wird durch ein an einem zweiten Werkzeughalter angeordnetes Werkzeug bearbeitet, während in der Spanneinrichtung ein weiteres Werkstück oder Werkstückteil eingespannt bleibt oder eingespannt wird und durch ein an einem ersten Werkzeughalter angeordnetes Werkzeug bearbeitet wird. Die Bearbeitung des im Abholfutter gehaltenen Werkstücks kann unmittelbar nach dem Abtrennvorgang oder nach einem Drehen des Abholfutters um 180° erfolgen. Die Drehbarkeit des Abholfutters kann auch dazu benutzt werden, den abgetrennten und bearbeiteten Werkstückabschnitt aus der Vorrichtung herauszubefördern.

Nachfolgend wird ein bevorzugtes Ausführungsbeispiel einer erfindungsgemäßen Vorrichtung anhand der Zeichnung näher beschrieben.

Es zeigen:
- Fig. 1: eine perspektivische Ansicht einer erfindungsgemäßen Vorrichtung mit einer Sägeeinrichtung und einem Werkzeughalter;
- Fig. 2: eine schematische Ansicht des Endbereichs eines büchsenförmigen Werkstücks sowie eines Abholfutters einer erfindungsgemäßen Vorrichtung.

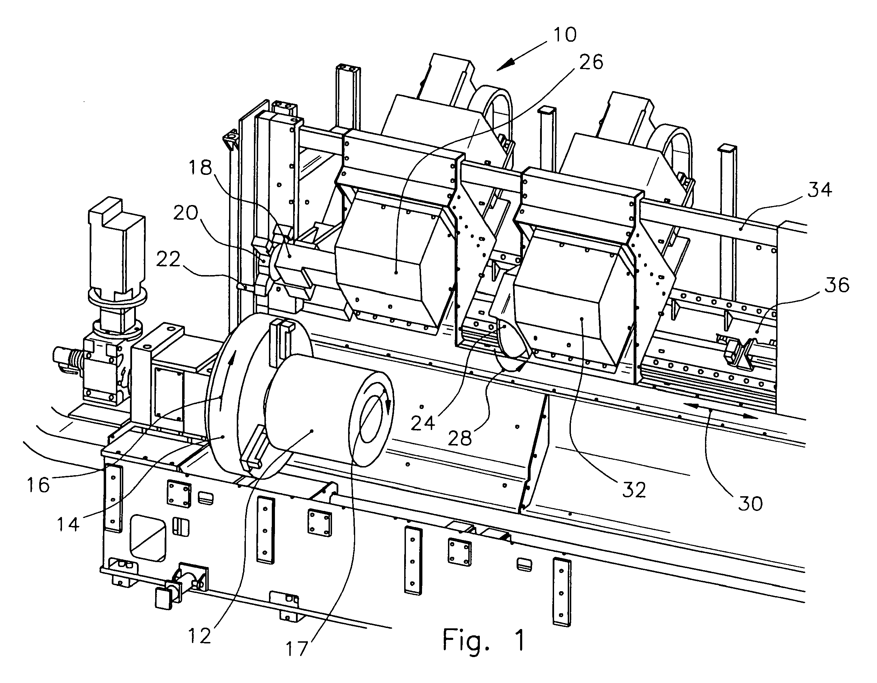

Fig. 1 zeigt eine Vorrichtung 10 zur Bearbeitung von rohr- oder stangenförmigen Werkstücken 12, wobei hier ein rohrförmiges Werkstück 12 gezeigt ist, das in einer Spanneinrichtung 14 gehalten ist. Die Spanneinrichtung 14 ist in Pfeilrichtung 16 rotierend antreibbar und versetzt somit auch das Werkstück 12 in eine Rotation in Pfeilrichtung 17. Der Antrieb der Spanneinrichtung 14 kann auch so ausgelegt sein, dass ein Antrieb entgegen den Pfeilrichtungen 16, 17 möglich ist.

An der Vorrichtung 10 ist außerdem ein Werkzeughalter 18 angeordnet, der als Revolverkopf 20 ausgebildet ist. Der Revolverkopf 20 kann unterschiedliche Werkzeuge aufnehmen. Im dargestellten Beispiel trägt er einen Drehmeißel 22. Der Werkzeughalter 18 ist an einem Schlitten 26 angeordnet und durch diesen in Pfeilrichtung 30 horizontal verschiebbar.

Die Vorrichtung weist außerdem eine Kreissäge 24 auf, die an einem separaten Schlitten 32 angeordnet ist, der gleichzeitig den Rotationsantrieb für die Kreissäge 24 enthält, sodass sich die Kreissäge in Pfeilrichtung 28 drehen kann. Auch die Kreissäge 24 ist in Pfeilrichtung 30 horizontal verschiebbar, wobei sich die beiden Schlitten 26, 32 unabhängig voneinander bewegen können. Im dargestellten Beispiel sind die beiden Schlitten 26, 32 an gemeinsamen Führungen 34, 36 angeordnet. Dies ist jedoch nicht zwingend. Es könnten für die beiden Schlitten auch unterschiedliche Führungen vorgesehen sein, sodass der Werkzeughalter 18 auch über die Kreissäge 24 hinweg auf deren andere Seite bewegt werden könnte.

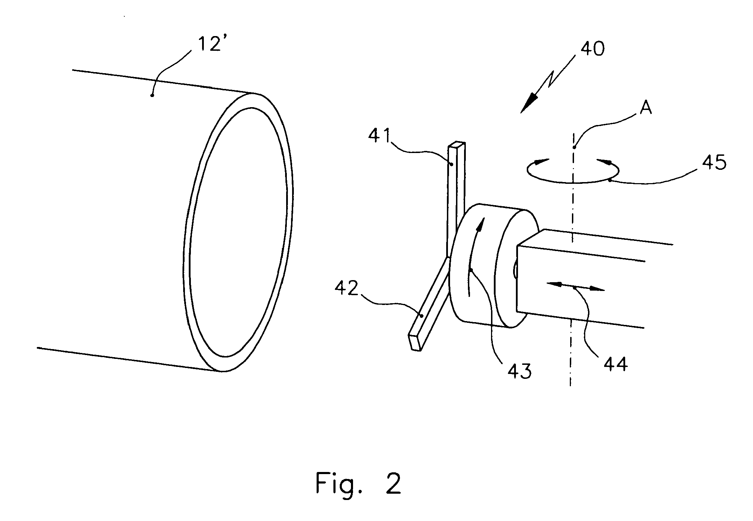

Fig. 2 zeigt schematisch das freie Ende eines Werkstücks 12' sowie ein Abholfutter 40, das das Werkstück 12' an seinem freien Ende aufnehmen kann. Es weist dazu drei Spreizbacken 41, 42 auf, die von innen gegen das Werkstück 12' anstellbar sind. Das Abholfutter 40 weist außerdem einen Drehantrieb auf, sodass die Spreizbacken 41, 42 in Pfeilrichtung 43 in Rotation versetzbar sind und sich somit synchron zur Rotation einer in Fig. 2 nicht dargestellten Spanneinrichtung versetzen lassen. Das Abholfutter 40 ist außerdem in den Richtungen des Doppelpfeils 44 horizontal verschiebbar gelagert. Diese Bewegung kann es auch bei gespanntem Werkstück 12' ausführen. Außerdem lässt sich das Abholfutter 40 um eine Achse A in den Richtungen des Doppelpfeils 45 um 180° drehen, wodurch das gespannte Werkstück 12' ebenfalls um 180° gedreht und aus der Vorrichtung herausbefördert werden kann.

## Patentansprüche

1. Vorrichtung zur mechanischen Bearbeitung von rohr- oder stangenförmigen Werkstücken (12) mit einer Spanneinrichtung (14) zum Halten eines Werkstücks (12), mit einer Sägeeinrichtung (24) zum Durchtrennen des Werkstücks (12) und mit einer Antriebseinrichtung, über die das Werkstück (12) gegenüber der Sägeeinrichtung (24) rotativ antreibbar ist, und mit mindestens einem Werkzeughalter (18) zur Aufnahme mindestens eines Werkzeugs (22), wobei der mindestens eine Werkzeughalter (18) getrennt von der Sägeeinrichtung (24) und horizontal verfahrbar angeordnet ist und dass mit einem an dem mindestens einen Werkzeughalter (18) angeordneten Werkzeug (22) mindestens eine der Stirnseiten und/oder die äußere Oberfläche und/oder die innere Oberfläche des Werkstücks (12) bearbeitbar ist, dadurch **gekennzeichnet, dass** die Vorrichtung (10) ein verfahrbares Abholfutter (40) aufweist, mit dem ein bearbeitetes Werkstück (12) aus der Vorrichtung ausführbar ist und mit dem ein Werkstück (12') spannbar und durch ein am Werkzeughalter (18) angeordnetes Werkzeug (22) bearbeitbar ist, und dass mit dem Abholfutter (40) ein erstes Werkstück (12') und mit der Spanneinrichtung (14) gleichzeitig ein zweites Werkstück (12) spannbar ist, wobei das Abholfutter (40) um eine senkrecht zur Längsachse des Werkstücks (12') verlaufende Achse (A) um 180° schwenkbar angeordnet ist.

2. Vorrichtung nach Anspruch 1, **dadurch gekennzeichnet, dass** zwei Werkzeughalter vorgesehen sind, wobei die Sägeeinrichtung (24) in axialer Erstreckung des Werkstücks (12) gesehen zwischen den beiden Werkzeughaltern (18) angeordnet ist.

3. Vorrichtung nach Anspruch 1 oder 2, **dadurch gekennzeichnet, dass** das Abholfutter (40) das Werkstück (12') von innen spannt.

4. Vorrichtung nach Anspruch 3, **dadurch gekennzeichnet, dass** das Abholfutter (40) mindestens drei gegen die innere Oberfläche des Werkstücks (12') anstellbare Spreizbacken (41, 42) aufweist.

5. Vorrichtung nach einem der Ansprüche 1 - 4, **dadurch gekennzeichnet**, **dass** die Spanneinrichtung (14) als Hohlspannfutter und/oder als Backenfutter ausgebildet ist

6. Vorrichtung nach einem der Ansprüche 1 - 5, **dadurch gekennzeichnet**, **dass** die Spanneinrichtung (14) das Werkstück (12) von innen spannt.

7. Vorrichtung nach einem der Ansprüche 1 - 6, **dadurch gekennzeichnet**, **dass** die Spanneinrichtung (14) und/oder die Sägeeinrichtung (24) horizontal verfahrbar ist.

8. Vorrichtung nach einem der Ansprüche 1 - 7, **dadurch gekennzeichnet**, **dass** der oder die Werkzeughalter (18) als Revolverkopf (20) bzw. Revolverköpfe zur gleichzeitigen Aufnahme von mehreren angetriebenen und/oder nicht angetriebenen Werkzeugen (22) ausgebildet ist/sind.

9. Vorrichtung nach einem der Ansprüche 1 - 8, **dadurch gekennzeichnet**, **dass** das zu bearbeitende Werkstück (12) auf Stützrollen gelagert ist.

10. Verfahren zum mechanischen Bearbeiten von rohr- oder stangenförmigen Werkstücken (12) mit folgenden Verfahrensschritten:
a) Einführen des zu bearbeitenden Werkstücks (12) in die Vorrichtung (10) und einseitiges Einspannen des Werkstücks (12) mit einer Spanneinrichtung ;
b) Zustellen des Werkzeugs (22) oder der Werkzeuge zum rotierenden oder zum nach der Zustellung rotierenden Werkstück (12);
c) Bearbeitung der Außen- und/oder Innenoberfläche und/oder des freien Endes des Werkstücks (12) mit dem oder den angetriebenen und/oder nicht angetriebenen Werkzeugen (22);
d) Abtrennen eines bearbeiteten Werkstückabschnitts von in der Spanneinrichtung eingespannten Werkstücken (12) mittels einer Sägeeinrichtung (24);
e) Aufnahme des abgetrennten Werkstückabschnitts durch ein Abholfutter (40);
f) Bearbeiten, insbesondere Entgraten des abgetrennten freien Endes des Werkstückabschnitts (34) durch ein an einem zweiten Werkzeughalter (18) angeordnetes Werkzeug (22), während in die Spanneinrichtung (14) ein weiteres Werkstück (12) oder Werkstückteil eingespannt bleibt oder wird und durch ein an einem ersten Werkzeughalter (18) angeordnetes Werkzeug (22) bearbeitet wird;
g) Ausführen des bearbeiteten Werkstückabschnitts aus der Vorrichtung (10) mittels des Abholfutters, wobei das Abholfutter (40) vor Verfahrensschritt (f) oder vor Verfahrensschritt (g) um 180° gedreht wird.

## Claims

1. Device for mechanical processing of tube or rod shaped work pieces (12) with a clamping device (14) to hold a work piece (12), with a saw device (24) for cutting through the work piece (12) and with a drive device, through which the work piece (12) may be driven rotating opposite the saw device (24) and with at least one tool holder (18) to take at least one tool (22), in which the at least one tool holder (18) is arranged separately from the saw device (24) and may be moved horizontally and at least one of the end faces and/or the outer surface and/or the inner surface of the work piece (12) may be processed with a tool (22) arranged on the at least one tool holder (18), **characterised in that** the device (10) has a collection chuck (40) that may be moved, with which a processed work piece (12) may be taken out of the device and with which a work piece (12') may be clamped and processed through a tool (22) arranged on the tool holder (18) and a first work piece (12') may be clamped with the collection chuck (40) and at the same time a second work piece (12) may be clamped with the clamping device (14), in which the collection chuck (40) is arranged to pivot by 180° around an axis (A) running perpendicular to the longitudinal axis of the work piece (12').

2. Device according to claim 1, characerised in that two tool holders are provided, in which the saw device (24) is seen in an axial extension of the work piece (12) arranged between both tool holders (18).

3. Device according to claim 1 or 2, **characterised in that** the collection chuck (40) clamps the work piece (12') from inside.

4. Device according to claim 3, **characterised in that** the collection chuck (40) has at least three expanding jaws (41, 42) that may be adjusted against the inner surface of the work piece (12').

5. Device according to one of claims 1 - 4, **characterised in that** the clamping device (14) is made as a hollow clamping chuck and/or as a jaw chuck.

6. Device according to one of claims 1 - 5, **characterised in that** the clamping device (14) clamps the work piece (12) from inside.

7. Device according to one of claims 1 - 6, **characterised in that** the clamping device (14) and/or the saw device (24) may be moved horizontally.

8. Device according to one of claims 1 - 7, **characterised in that** the tool holder or tool holders (18) is/are made as a turret head (20) or turret heads to take several driven and/or non-driven tools (22) at the same time.

9. Device according to one of claims 1 - 8, **characterised in that** the work piece to be processed (12) is supported on support rollers.

10. Method for mechanical processing of tube or rod shaped work pieces (12) with the following process steps:
a) Insert the work piece to be processed (12) into the device (10) and clamp the work piece (12) on one side with a clamping device;
b) Feed the tool (22) or tools to the rotating work piece (12) or work piece rotating after feeding;
c) Process the outer and/or inner surface and/or the free end of the work piece (12) with the driven and/or non-driven tool or tools (22);
d) Separate a processed work piece section from work pieces (12) clamped in the clamping device by means of a saw device (24);
e) Pick up the separated work piece section through a collection chuck (40);
f) Process, particularly deburr the separated free end of the work piece section (34) through a tool (22) arranged on a second tool holder (18), whilst a further work piece (12) or work piece part remains or is clamped in the clamping device (14) and is processed through a tool (22) arranged on a first tool holder (18);
g) Take the processed work piece section out of the device (10) by means of the collection chuck, in which the collection chuck (40) is turned by 180° before process step (f) or before process step (g).

## Revendications

1. Dispositif d'usinage mécanique de pièces (12) en forme de tube ou de barre, avec un dispositif de serrage (14) pour le maintien d'une pièce (12), avec un dispositif de sciage (24) pour la séparation par découpe de la pièce (12) et avec un dispositif d'entraînement par le biais duquel la pièce (12) peut être entraînée en rotation par rapport au dispositif de sciage (24), et avec au moins un porte-outil (18) pour la réception d'au moins un outil (22), l'au moins un porte-outil (18) étant disposé séparément du dispositif de sciage (24) et de façon mobile horizontalement, et au moins une des faces avant et/ou la surface extérieure et/ou la surface intérieure de la pièce (12) pouvant être usinées avec un outil (22) disposé sur l'au moins un porte-outil (18), **caractérisé en ce que** le dispositif (10) présente un mandrin de prise (40) mobile avec lequel une pièce (12) usinée peut être extraite du dispositif et avec lequel une pièce (12') peut être serrée et usinée par un outil (22) disposé sur le porte-outil (18), et **en ce que**, avec le mandrin de prise (40), une première pièce (12') peut être serrée et, avec le dispositif de serrage (14), une deuxième pièce (12) peut être serrée simultanément, le mandrin de prise (40) étant disposé de façon à pouvoir pivoter de 180° autour d'un axe (A) placé perpendiculairement à l'axe longitudinal de la pièce (12').

2. Dispositif selon la revendication 1, **caractérisé en ce qu'**il est prévu deux porte-outils, le dispositif de sciage (24) étant disposé entre les deux porte-outils (18), vu dans l'étendue axiale de la pièce (12).

3. Dispositif selon la revendication 1 ou 2, **caractérisé en ce que** le mandrin de prise (40) serre la pièce (12') de l'intérieur.

4. Dispositif selon la revendication 3, **caractérisé en ce que** le mandrin de prise (40) présente au moins trois mâchoires d'écartement (41, 42) pouvant être plaquées contre la surface intérieure de la pièce (12').

5. Dispositif selon une des revendications 1 à 4, **caractérisé en ce que** le dispositif de serrage (14) est constitué en tant que mandrin de serrage creux et/ou en tant que mandrin à mâchoires.

6. Dispositif selon une des revendications 1 à 5, **caractérisé en ce que** le dispositif de serrage (14) serre la pièce (12) de l'intérieur.

7. Dispositif selon une des revendications 1 à 6, **caractérisé en ce que** le dispositif de serrage (14) et/ou le dispositif de sciage (24) sont mobiles horizontalement.

8. Dispositif selon une des revendications 1 à 7, **caractérisé en ce que** le ou les porte-outils (18) est/sont constitué(s) en tant que tourelle (20) ou tourelles pour la réception simultanée de plusieurs outils (22) entraînés et/ou non entraînés.

9. Dispositif selon une des revendications 1 à 8, **caractérisé en ce que** la pièce (12) à usiner est supportée sur des rouleaux d'appui.

10. Procédé d'usinage mécanique de pièces (12) en forme de tube ou de barre, avec les étapes de procédé suivantes :
a) Introduction de la pièce (12) à usiner dans le dispositif (10) et serrage unilatéral de la pièce (12) avec un dispositif de serrage ;
b) Rapprochement de l'outil (22) ou des outils en direction de la pièce (12) en rotation ou de la pièce (12) en rotation après le rapprochement ;
c) Usinage de la surface extérieure et/ou intérieure et/ou de l'extrémité libre de la pièce (12) avec l'outil ou les outils (22) entraîné(s) et/ou non entraîné(s) ;
d) Séparation par découpe, au moyen d'un dispositif de sciage (24), d'un tronçon de pièce usinée pour le séparer des pièces (12) serrées dans le dispositif de serrage ;
e) Réception, par un mandrin de prise (40), du tronçon de pièce séparé par découpe ;
f) Usinage, en particulier ébavurage, de l'extrémité libre séparée par découpe du tronçon de pièce (34) par un outil (22) disposé sur un deuxième porte-outil (18) pendant qu'une autre pièce (12) ou partie de pièce demeure serrée ou est serrée dans le dispositif de serrage (14) et est usinée par un outil (22) disposé sur un premier porte-outil (18) ;
g) Extraction du tronçon de pièce usiné hors du dispositif (10) au moyen du mandrin de prise, le mandrin de prise (40) étant tourné de 180° avant l'étape de procédé (f) ou avant l'étape de procédé (g).
